# EUROPÄISCHE PATENTSCHRIFT

(11) **EP 1 006 029 B1**
(45) Veröffentlichungstag und Bekanntmachung des Hinweises auf die Patenterteilung: **25.08.2004**
(21) Anmeldenummer: 99123177.0
(22) Anmeldetag: 23.11.1999
(51) Int. Cl.: B60S 1/50, B60S 1/48

(54) **Scheibenreinigungsanlage für ein Kraftfahrzeug**
Window washing device for a vehicle
Dispositif lave-glace pour un véhicule

(30) Priorität: 05.12.1998 DE 19856174
(43) Veröffentlichungstag der Anmeldung: 07.06.2000
(73) Patentinhaber: Siemens Aktiengesellschaft, 80333 München (DE)
(72) Erfinder: Petzold, Sven, 65191 Wiesbaden (DE); Kober, Rainer, 64297 Darmstadt (DE)

(56) Entgegenhaltungen:
- WO-A-98/29285
- DE-A- 3 313 095
- DE-A- 3 827 744
- DE-A- 19 501 210
- FR-A- 2 269 437

## Beschreibung

Die Erfindung betrifft eine Scheibenreinigungsanlage für ein Kraftfahrzeug, wobei die Steuerungseinheit und der Waschflüssigkeitsbehälter als vormontierbare bauliche Einheit gestaltet sind, der Waschflüssigkeitsbehälter eine Wanne zur Aufnahme der elektronischen Steuerungseinheiten oder der elektronischen Steuerungseinheit hat und die Wanne von einem in dem Waschflüssigkeitsbehälter verrastbaren Deckel verschließbar ist.

Solche Scheibenreinigungsanlagen werden in heutigen Kraftfahrzeugen häufig eingesetzt und sind beispielsweise aus der WO 98/29285, die der Oberbegriff des Anspruchs 1 offenbart, bekannt. In dem Waschflüssigkeitsbehälter befinden sich hierbei jeweils eine Waschflüssigkeitspumpe für eine Frontscheibe des Kraftfahrzeuges. Die Waschflüssigkeitspumpe lässt sich unabhängig von innerhalb der Fahrgastzelle des Kraftfahrzeuges angeordneten Bedienelementen ansteuern. Die elektronische Steuerungseinheit ist am Waschflüssigkeitsbehälter befestigt und ist zum Schutz vor Spritzwasser abgedeckt. Von der Steuerungseinheit führen Signalleitungen zu den Bedienelementen und Versorgungsleitungen für elektrische Energie zu der Waschflüssigkeitspumpe und zu dem Stromnetz des Kraftfahrzeuges.

Nachteilig bei der bekannten Scheibenreinigungsanlage ist, daß sich der Schutz der Steuerungseinheit vor Spritzwasser und Beschädigung sehr aufwendig gestaltet.

Der Erfindung liegt das Problem zugrunde, eine Scheibenreinigungsanlage der eingangs genannten Art so zu gestalten dass sie möglichst einfach montiert werden kann und die Steuerungseinheit mit besonders geringem Aufwand geschützt ist.

Dieses Problem wird erfindungsgemäß dadurch gelöst, dass der Deckel an einer Seite über ein Filmscharnier mit dem Waschflüssigkeitsbehälter verbunden ist.

Durch diese Gestaltung lassen sich alle elektrischen Bauteile der erfindungsgemäßen Scheibenreinigungsanlage in die Wanne des Waschflüssigkeitsbehälters einsetzen und sind vor Beschädigung geschützt. Durch einfaches Verrasten des einstückig mit dem Waschflüssigkeitsbehälter gefertigten Deckels ist die elektronische Steuerungseinheit besonders zuverlässig vor Spritzwasser geschützt. Weiterhin wird durch diese Gestaltung die Montage der erfindungsgemäßen Scheibenreinigungsanlage vereinfacht. Der Deckel kann zudem nicht verloren gehen. Hierdurch gestaltet sich die erfindungsgemäße Scheibenreinigungsanlage besonders kostengünstig. Ein weiterer Vorteil der erfindungsgemäßen Scheibenreinigungsanlage besteht darin, dass sich die Versorgungsleitungen sehr kurz bemessen lassen. Da die Waschflüssigkeitspumpen Anlaufströme von 30 bis 50 Ampere erfordern, sind die Versorgungsleitungen mit einem großen Querschnitt zu versehen. Deshalb führt eine Verringerung der Länge der Versorgungsleitungen zu einer großen Verringerung der Herstellungskosten der erfindungsgemäßen Scheibenreinigungsanlage.

Häufig haben Scheibenwischer bekannter Scheibenreinigungsanlagen für verschiedene Scheiben des Kraftfahrzeuges jeweils eigene elektronische Steuerungseinheiten, mit denen sie sich unabhängig voneinander ansteuern lassen. Weiterhin hat die bekannte Scheibenreinigungsanlage eine weitere elektronische Steuerungseinheit zur Ansteuerung von Heizelementen für Waschdüsen, Waschflüssigkeitsleitungen und den Waschflüssigkeitsbehälter bei niedrigen Außentemperaturen. Dann trägt es zur weiteren Vereinfachung der Montage der erfindungsgemäßen Scheibenreinigungsanlage im Kraftfahrzeug bei, wenn zumindest eine weitere elektronische Steuerungseinheit einer Heizeinrichtung für die Waschflüssigkeit, eines motorischen Antriebs für verfahrbare Waschdüsen, eines Mehrwegeventils zur Verteilung der Waschflüssigkeit oder eines Scheibenwischers an dem Waschflüssigkeitsbehälter befestigt ist. Da hierdurch die Steuerungseinheiten für verschiedene Bauteile der Scheibenreinigungsanlage nahe nebeneinander angeordnet sind, gestalten sich Verdrahtungen der Steuerungseinheiten untereinander besonders kostengünstig. Damit läßt sich beispielsweise sehr einfach der Betrieb des Scheibenwischers und der Waschdüsen synchronisieren.

Zur weiteren Vereinfachung der Montage der erfindungsgemäßen Scheibenreinigungsanlage trägt es bei, wenn eine Auswerteeinrichtung eines Füllstandsensors an dem Waschflüssigkeitsbehälter befestigt ist. Da hierbei der Füllstandsensor und die Auswerteeinrichtung nahe beieinander angeordnet sind, führt diese Gestaltung zu einer besonders kostengünstigen Fertigung der erfindungsgemäßen Scheibenreinigungsanlage.

Mehrere Füllstände im Waschflüssigkeitsbehälter lassen sich gemäß einer anderen vorteilhaften Weiterbildung der Erfindung mit besonders geringem baulichen Aufwand messen, wenn der Füllstandsensor mehrere in die Wandung des Füllstandes eingelassene Kontaktplättchen zur Leitfähigkeitsmessung hat.

Die elektronischen Steuerungseinheiten und die Auswerteeinrichtung des Füllstandsensors lassen sich gemäß einer anderen vorteilhaften Weiterbildung der Erfindung einfach miteinander verbinden, wenn mehrere der elektronischen Steuerungseinheiten und die Auswerteeinrichtung des Füllstandsensors eine bauliche Zentraleinheit bilden. Durch diese Gestaltung vereinfacht sich die Verdrahtung der Steuerungseinheiten untereinander, so daß die Steuerungen beispielsweise nur noch eine einzige Versorgungsleitung für elektrischen Strom benötigen. Weiterhin können dank der Erfindung die Steuerungseinheiten und die Auswerteeinrichtung des Füllstandsensors gemeinsame Hardware wie beispielsweise einen Prozessor und eine gemeinsame Software aufweisen.

Die Montage der erfindungsgemäßen Scheibenreinigungsanlage im Kraftfahrzeug läßt sich weiter vereinfachen, wenn die elektronischen Steuerungseinheiten und die Auswerteeinrichtung des Füllstandsensors eine gemeinsame Anschlußbuchse aufweisen. Weiterhin lassen sich durch diese Gestaltung die einzelnen Bauteile der erfindungsgemäßen Scheibenreinigungsanlage sehr einfach mit einem Datenbus verbinden.

Eine Überfüllwarnung oder eine Nachfüllanzeige für den Waschflüssigkeitsbehälter läßt sich gemäß einer anderen vorteilhaften Weiterbildung der Erfindung mit besonders geringem baulichen Aufwand erzeugen, wenn an der Auswerteeinrichtung des Füllstandsensors eine optische oder akustische Signaleinrichtung zum Erzeugen einer Überfüllwarnung und/oder eines Signals bei einer Unterschreitung eines Mindestfüllstandes angeordnet ist. Hierdurch ist ein nur unwesentlicher Aufwand für die Verdrahtung der Signaleinrichtung erforderlich. Weiterhin läßt sich dank der Erfindung der Waschflüssigkeitsbehälter für den Nachfüllenden problemlos identifizieren. Die leichte Identifizierung vereinfacht insbesondere bei einem Waschflüssigkeitsbehälter mit getrennten Kammern für Wasser, Reinigungskonzentrat und Frostschutz das Nachfüllen. Als Signaleinrichtung eignet sich insbesondere ein Summer und eine Leuchtdiode.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine schematische Darstellung einer erfindungsgemäßen Scheibenreinigungsanlage,
- Fig.2: eine weitere Ausführungsform der erfindungsgemäßen Scheibenreinigungsanlage,
- Fig.3: die Scheibenreinigungsanlage aus Figur 2 in einer Schnittdarstellung entlang der Linie III - III.

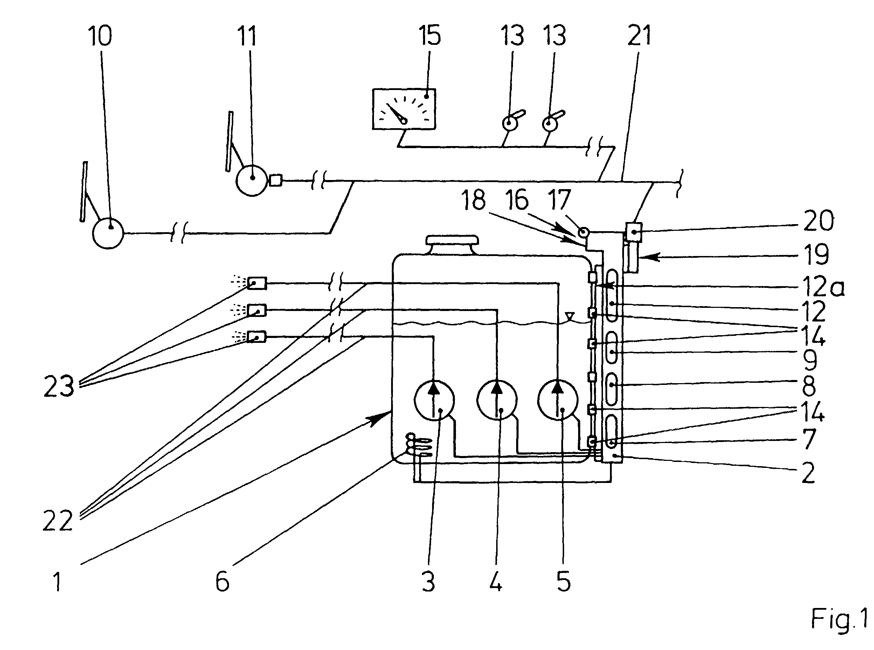

Die Figur 1 zeigt schematisch eine erfindungsgemäße Scheibenreinigungsanlage mit einem Waschflüssigkeitsbehälter 1 und einer elektronischen Zentraleinheit 2. Der Waschflüssigkeitsbehälter 1 hat drei Waschflüssigkeits pumpen 3 - 5 und eine Heizeinrichtung 6. Innerhalb der elektronischen Zentraleinheit 2 sind jeweils eine elektronische Steuerungseinheit 7 - 9 für die Waschflüssigkeitspumpen 3 - 5, die Heizeinrichtung 6 und für zwei Scheibenwischer 10, 11 angeordnet. Selbstverständlich kann die erfindungsgemäße Scheibenreinigungsanlage weitere Steuerungseinheiten beispielsweise zum Verfahren von Waschdüsen oder zum Schalten eines Mehrwegeventils für eine Verteilung von Waschflüssigkeit aufweisen. Weiterhin weist die Zentraleinheit 2 eine Auswerteeinrichtung 12 eines Füllstandsensors 12a zur Erfassung eines Füllstandes von Waschflüssigkeit in dem Waschflüssigkeitsbehälter 1 auf. Die Scheibenwischer 10,11 und die Waschflüssigkeitspumpen 3 - 5 lassen sich von Bedienelementen 13 schalten. Selbstverständlich können die Scheibenwischer zusätzlich vor einen nicht dargestellten Regensensor geschaltet werden. Die Heizeinrichtung 6 wird von einer der elektronischen Steuerungseinheiten 7 - 9 in Abhängigkeit von der Außentemperatur geschaltet. Hierdurch wird die erfindungsgemäße Scheibenreinigungsanlage vor einem Einfrieren geschützt.

Die Auswerteeinrichtung 12 des Füllstandsensors 12a hat mehrere die Wandung des Waschflüssigkeitsbehälters 1 durchdringende Kontaktplättchen 14 und erzeugt mittels einer Leitfähigkeitsmessung elektrische Signale in Abhängigkeit von dem Füllstand der Waschflüssigkeit im Waschflüssigkeitsbehälter 1. Die elektrischen Signale werden anschließend ausgewertet und zu einer Anzeige 15 für einen Fahrerplatz des Kraftfahrzeuges oder zu einer Signaleinrichtung 16 mit einer Leuchtdiode 17 und einem Summer 18 gesendet. Hierdurch wird wahlweise eine Überfüllwarnung oder ein Nachfüllerfordernis signalisiert. Das Nachfüllerfordernis kann hierbei permanent oder beispielsweise nur während des Nachfüllens eines Kraftstoffbehälters des Kraftfahrzeuges angezeigt werden.

Die elektronischen Steuerungseinheiten 7 - 9 und die Auswerteeinrichtung 12 haben eine gemeinsame, an der Oberseite der Zentraleinheit 2 angeordnete Anschlußbuchse 19 für einen Stecker 20 eines Leitungsnetzes 21 des Kraftfahrzeuges. Das Leitungsnetz 21 ist als Datenbus ausgebildet und verbindet alle elektrischen Bauteile der erfindungsgemäßen Scheibenreinigungsanlage. Weiterhin werden die elektrischen Bauteile über das Leitungsnetz mit elektrischem Strom versorgt.

Die Waschflüssigkeitspumpen 3 - 5 dienen zum Fördern von Waschflüssigkeit aus dem Waschflüssigkeitsbehälter 1 über Waschflüssigkeitsleitungen 22 zu vor nicht dargestellten Scheiben anzuordnenden Waschdüsen 23. Die Anzeige 15 und die Bedienelemente 13 sind zur Anordnung in einer nicht dargestellten Fahrgastzelle des Kraftfahrzeuges vorgesehen.

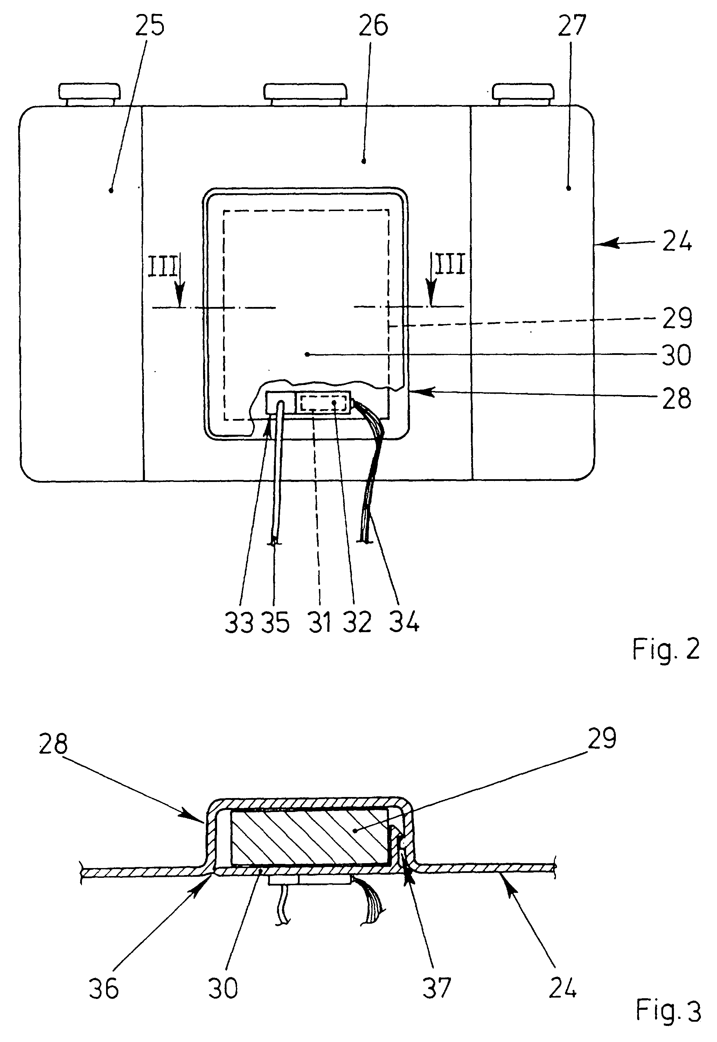

Die Figur 2 zeigt einen Waschflüssigkeitsbehälter 24 mit jeweils getrennten Kammern 25 - 27 für Wasser, Reinigungskonzentrat und Frostschutz. Der Waschflüssigkeitsbehälter 24 hat eine Wanne 28 zur Aufnahme einer gemeinsamen elektronischen Steuerungseinheit 29 für die in Figur 1 dargestellten Scheibenwischer (10, 11) und die Waschflüssigkeitspumpe (3 - 5). Die Steuerungseinheit 29 ist von einem Deckel 30 geschützt. Weiterhin hat die elektronische Steuerungseinheit 29 eine Anschlußbuchse 31 für einen Stecker 32 eines Datenbusses 34 und einen Anschluß 33 für Versorgungsleitungen 35 aller am oder im Waschflüssigkeitsbehälter 24 angeordneten Bauteile der Scheibenreinigungsanlage mit elektrischem Strom.

Die Figur 3 zeigt den Waschflüssigkeitsbehälter 24 aus Figur 2 in einer Schnittdarstellung entlang der Linie III - III. Hierbei ist zu erkennen, daß die elektronische Steuerungseinheit 29 zwischen dem Deckel 30 und dem Waschflüssigkeitsbehälter 24 eingespannt ist. Eine nicht dargestellte Dichtung und eine Tauchlackierung der elektronischen Steuereinheit 29 gewährleisten einen ausreichenden Schutz gegen Feuchtigkeit. Der Deckel 30 ist über ein Filmscharnier 36 mit dem Waschflüssigkeitsbehälter 24 verbunden und hat an seinem dem Filmscharnier 36 gegenüberliegenden Ende eine Rastverbindung 37 mit dem Waschflüssigkeitsbehälter 24.

## Patentansprüche

1. Scheibenreinigungsanlage für ein Kraftfahrzeug mit einem Waschflüssigkeitsbehälter (1, 24) zur Bevorratung von Waschflüssigkeit, mit zumindest einer am oder im Waschflüssigkeitsbehälter (1, 24) angeordneten Waschflüssigkeitspumpe (3-5) zum Fördern von Waschflüssigkeit aus dem Waschflüssigkeitsbehälter (1, 24) zu vor Scheiben des Kraftfahrzeuges anzuordnenden Waschdüsen (23) und mit einer elektronischen Steuerungseinheit (7-9, 29) zum Ansteuern der Waschflüssigkeitspumpe (3-5) oder der Waschflüssigkeitspumpen (3-5), wobei die Steuerungseinheit (7-9, 29) und der Waschflüssigkeitsbehälter (1, 24) als vormontierbare bauliche Einheit gestaltet sind, der Waschflüssigkeitsbehälter (24) eine Wanne (28) zur Aufnahme der elektronischen Steuerungseinheiten oder der elektronischen Steuerungseinheit (29) hat und die Wanne (28) von einem in dem Waschflüssigkeitsbehälter (24) verrastbaren Deckel (30) verschließbar ist, **dadurch gekennzeichnet, dass** der Deckel (30) an einer Seite über ein Filmscharnier (36) mit dem Waschflüssigkeitsbehälter (24) verbunden ist.

2. Scheibenreinigungsanlage nach Anspruch 1, **dadurch gekennzeichnet, dass** zumindest eine weitere elektronische Steuerungseinheit (7 - 9) einer Heizeinrichtung (6) für die Waschflüssigkeit, eines motorischen Antriebs für verfahrbare Waschdüsen, eines Mehrwegeventils zur Verteilung der Waschflüssigkeit oder eines Scheibenwischers (10, 11) an dem Waschflüssigkeitsbehälter (1) befestigt ist.

3. Scheibenreinigungsanlage nach Anspruch 1 oder 2, **dadurch gekennzeichnet, dass** eine Auswerteeinrichtung (12) eines Füllstandsensors (12a) an dem Waschflüssigkeitsbehälter (1) befestigt ist.

4. Scheibenreinigungsanlage nach Anspruch 3, **dadurch gekennzeichnet, dass** der Füllstandsensor (12a) mehrere in die Wandung des Waschflüssigkeitsbehälters (1) eingelassene Kontaktplättchen (14) zur Leitfähigkeitsmessung hat.

5. Scheibenreinigungsanlage nach Anspruch 3 oder 4, **dadurch gekennzeichnet, dass** mehrere der elektronischen Steuerungseinheiten (7 - 9) und die Auswerteeinrichtung (12) des Füllstandsensors (12a) eine bauliche Zentraleinheit (2) bilden.

6. Scheibenreinigungsanlage nach zumindest einem der Ansprüche 3 bis 5, **dadurch gekennzeichnet, dass** die elektronischen Steuerungseinheiten (7-9, 29) und die Auswerteeinrichtung (12) des Füllstandsensors (12a) eine gemeinsame Anschlussbuchse (19, 31) aufweisen.

7. Scheibenreinigungsanlage nach zumindest einem der Ansprüche 3 bis 6, **dadurch gekennzeichnet, dass** an der Auswerteeinrichtung (12) des Füllstandsensors (12a) eine optische oder akustische Signaleinrichtung (16) zum Erzeugen einer Überfüllwarnung und/oder eines Signals bei einer Unterschreitung eines Mindestfüllstandes angeordnet ist.

## Claims

1. Window and lens glass cleaning system for a motor vehicle, having a washer fluid container (1, 24) for storing washer fluid, having at least one washer fluid pump (3-5) which is arranged on or in the washer fluid container (1, 24), for conveying washer fluid from the washer fluid container (1, 24) to washer nozzles (23) to be arranged in front of motor vehicle windows and lenses, and having an electronic control unit (7-9, 29) for activating the washer fluid pump (3-5) or the washer fluid pumps (3-5), the control unit (7 - 9, 29) and the washer fluid container (1, 24) being designed as a constructional unit which can be preassembled, the washer fluid container (24) having a trough (28) for accommodating the electronic control units or the electronic control unit (29), and the trough (28) being closable by a lid (30) which can be latched in the washer fluid container (24), **characterized in that** the lid (30) is connected to the washer fluid container (24) on one side via a film hinge (36).

2. Window and lens glass cleaning system according to Claim 1, **characterized in that** at least one further electronic control unit (7 - 9) of a heating device (6) for the washer fluid, of a motor drive for moveable washer nozzles, of a multiway valve for distributing the washer fluid or of a wiper (10, 11) is fastened on the washer fluid container (1).

3. Window and lens glass cleaning system according to Claim 1 or 2, **characterized in that** an evaluating device (12) of a fluid-level sensor (12a) is fastened on the washer fluid container (1).

4. Window and lens glass cleaning system according to Claim 3, **characterized in that** the fluid-level sensor (12a) has a plurality of contact plates (14) embedded in the wall of the washer fluid container (1), for measuring the conductivity.

5. Window and lens glass cleaning system according to Claim 3 or 4, **characterized in that** a plurality of the electronic control units (7 - 9) and the evaluating device (12) of the fluid-level sensor (12a) form a constructional central processing unit (2).

6. Window and lens glass cleaning system according to at least one of Claims 3 to 5, **characterized in that** the electronic control units (7 - 9, 29) and the evaluating device (12) of the fluid-level sensor (12a) have a common connecting socket (19, 31).

7. Window and lens glass cleaning system according to at least one of Claims 3 to 6, **characterized in that** an optical or acoustic signalling device (16) for generating an overfilling warning and/or a signal when the fluid level falls short of the minimum is arranged on the evaluating device (12) of the fluid-level sensor (12a).

## Revendications

1. Système lave-glace destiné à un véhicule automobile et comportant un réservoir de liquide de lavage (1, 24) pour stocker la réserve de liquide de lavage, au moins une pompe à liquide de lavage (3-5), disposée sur ou dans le réservoir du liquide de lavage (1, 24) et destinée au transport du liquide de lavage du réservoir du liquide de lavage (1, 24) vers des gicleurs de lavage (23) à disposer devant des glaces du véhicule automobile, et une unité électronique de commande (7-9, 29) permettant de commander la pompe à liquide de lavage (3-5) ou les pompes à liquide de lavage (3-5), l'unité électronique de commande (7-9, 29) et le réservoir du liquide de lavage (1, 24) étant conçus comme unité constructive préfabriquée, le réservoir du liquide de lavage (24) ayant une cuve (28) destinée à recevoir les unités électroniques de commande ou l'unité électronique de commande (29) et la cuve (28) pouvant être fermée par un couvercle (30) encliquetage dans le réservoir du liquide de lavage (24) **caractérisé par le fait que** le couvercle (30) est relié, sur un côté, par une charnière à bande (36) au réservoir du liquide de lavage (24).

2. Système lave-glace selon la revendication 1 **caractérisé par le fait que**, au moins, une autre unité électronique de commande (7-9) pour un dispositif de chauffage (6) pour le liquide de lavage, une pour un entraînement motorisé de gicleurs de lavage déplaçables, une pour une vanne à plusieurs voies permettant de répartir le liquide de lavage ou une pour un essuie-glace (10, 11) est fixée au réservoir du liquide de lavage (1).

3. Système lave-glace selon la revendication 1 ou 2 **caractérisé par le fait qu'**un dispositif d'évaluation (12) d'un capteur du niveau de remplissage (12a) est fixé au réservoir du liquide de lavage (1 ).

4. Système lave-glace selon la revendication 3 **caractérisé par le fait que** le capteur du niveau de remplissage (12a) a plusieurs plaquettes de contact (14), destinées à la mesure de la conductibilité, qui sont noyées dans la paroi du réservoir du liquide de lavage (1).

5. Système lave-glace selon la revendication 3 ou 4 **caractérisé par le fait que** plusieurs des unités é lectroniques de commande (7-9) et le dispositif d'évaluation (12) du capteur de niveau de remplissage (12a) forment une unité constructive centrale (2).

6. Système lave-glace selon au moins l'une des revendications 3 à 5 **caractérisé par le fait que** les unités électroniques de commande (7-9, 2 9) et le dispositif d'évaluation (12) du capteur d e niveau de remplissage (12a) ont une douille de raccordement commune (19, 31).

7. Système lave-glace selon au moins l'une des revendications 3 à 6 **caractérisé par le fait qu'**un dispositif de signalisation optique ou acoustique (16) destiné à générer une alarme de débordement et/ou un signal dans le cas d'un dépassement vers le bas d'un niveau minimum de remplissage est disposé sur le dispositif d'évaluation (12) du capteur de niveau de remplissage (12a).
